Europäisches Patentamt

European Patent Office

Office européen des brevets

(19)

(11) Veröffentlichungsnummer: **0 129 720**
**A2**

(12) # EUROPÄISCHE PATENTANMELDUNG

(21) Anmeldenummer: 84105924.9

(22) Anmeldetag: 23.05.84

(51) Int. Cl.⁴: **C 08 F 2/30**

(30) Priorität: 01.06.83 DE 3319782

(43) Veröffentlichungstag der Anmeldung:
02.01.85 Patentblatt 85/1

(84) Benannte Vertragsstaaten:
AT BE CH DE FR GB IT LI LU NL SE

(71) Anmelder: Henkel Kommanditgesellschaft auf Aktien
Postfach 1100 Henkelstrasse 67
D-4000 Düsseldorf-Holthausen(DE)

(72) Erfinder: Höfer, Rainer, Dr.
Klever Strasse 31
D-4000 Düsseldorf 30(DE)

(72) Erfinder: Meffert, Alfred, Dr.
Marie Curie Strasse 10
D-4019 Monheim(DE)

(72) Erfinder: Wegemund, Bernd, Dr.
Händelweg 3
D-5657Haan 1(DE)

(54) Verwendung der Umsetzungsprodukte von Ethylenoxid mit aliphatischen vicinalen Diolen als Emulgatoren für die Emulsionspolymerisation.

(57) Beschrieben wird die Verwendung der Umsetzungsprodukte von Ethylenoxid mit aliphatischen vicinalen Diolen, die 8 - 25 C-Atome aufweisen, als Polymerisationsemulgatoren. Die Produkte sind allein oder in Kombination mit anionischen oder nichtionischen Emulgatoren als oberflächenaktive Mittel bei der Herstellung von Polymerlatizes auf Basis ethylenisch ungesättigter Monomerer geeignet.

HENKEL KGaA
ZR-FE/Patente

4000 Düsseldorf, den 30.5.1983
Henkelstraße 67

Dr. Wik/Sr

P a t e n t a n m e l d u n g
D 6830 EP

"Verwendung der Umsetzungsprodukte von Ethylenoxid mit
aliphatischen vicinalen Diolen als Emulgatoren für die
Emulsionspolymerisation"

Die Erfindung liegt auf dem Gebiet der oberflächenaktiven Mittel. Sie beschreibt die Verwendung der Umsetzungsprodukte von Ethylenoxid mit den Ringsöffnungsprodukten aliphatischer Olefinoxide (aliphatische vicinale Diole) als Polymerisationsemulgatoren.

Es ist bekannt, die Polymerisation von im wesentlichen wasserunlöslichen ethylenisch ungesättigten Monomeren in Gegenwart von Emulgatoren in wäßriger Dispersion durchzuführen. Als Emulgatoren wurden bereits zahlreiche anionische, kationische aber auch nichtionische Verbindungen, und unter diesen insbesondere Umsetzungsprodukte des Ethylenoxids beschrieben. So wird z. B. in der deutschen Patentschrift 2 831 942 vorgeschlagen, die Umsetzungsprodukte von Ethylenoxid mit Alkylphenolen, insbesondere Octyl- und/oder Nonylphenol zu verwenden. Weiterhin sind auch die Umsetzungsprodukte mit nativen Fettalkoholen z. B. Lauryl- oder Talgfettalkohol für diesen Verwendungszweck bekannt und in der deutschen Auslegeschrift 1 269 360 beschrieben.

Auf dem hier angesprochenen Gebiet der Technik ist es für den Fachmann nicht möglich, aus der chemischen Struktur einer Substanz genaue Rückschlüsse auf ihre Eignung bei der Emulsionspolymerisation zu ziehen. Aufgrund der zahl-

...

reichen Anforderungen, die heute an Polymerdispersionen gestellt werden, besteht daher laufend Bedarf nach neuen Polymerisationsemulgatoren.

Von dieser Aufgabe ausgehend ist Gegenstand der Erfindung die Verwendung der Umsetzungsprodukte von Ethylenoxid mit aliphatischen vicinalen Diolen mit 8 - 25 C-Atomen als Emulgatoren bei der Emulsionspolymerisation ethylenisch ungesättigter Monomerer.

Die erfindungsgemäß verwendeten Umsetzungsprodukte von Ethylenoxid mit aliphatischen vicinalen Diolen sind bereits bekannt. So wird in der deutschen Patentschrift 1 190 927 die Umsetzung von 1,2-Diolen, die 8 - 26 Kohlenstoffatome enthalten mit Ethylenoxid beschrieben.

Weiterhin wird in der deutschen Offenlegungsschrift 2 900 030 ein Verfahren zur Ringöffnung innenständiger oder endständiger Olefinoxide, die 6 - 18 Kohlenstoffatome enthalten, mit mehrfunktionellen Alkoholen wie z. B. Ethylenglykol beschrieben. Die danach hergestellten Produkte können durch Umsetzung mit Ethylenoxid nach bekannten katalytischen Verfahren in die erfindungsgemäß zu verwendenden Produkte umgewandelt werden. Ihre Verwendung im Sinne der Erfindung ist jedoch nicht bekannt.

Nach einer ersten Ausführungsform betrifft die Erfindung die Verwendung der Umsetzungsprodukte von Ethylenoxid mit unverzweigten 1,2-Diolen mit n C-Atomen, wobei n eine gerade Zahl zwischen 8 und 24 und vorzugsweise zwischen 10 und 18 bedeutet. Die erfindungsgemäß zu verwendenden Produkte werden erhalten, indem man lineare 1,2-Epoxyalkane mit gerader Kohlenstoffzahl oder deren Mischungen der katalytischen Ringöffnung mit Ethylenglykol unterwirft und anschließend mit Ethylenoxid umsetzt. Es ist bevorzugt, die Ringöffnung der 1,2-Epoxyalkane sauer zu katalysieren. Bei der sauren Katalyse entstehen etwa zur Hälfte 1-Hydroxy-2-(2-hydroxyethoxy-)alkane, die somit 2 primäre Hydroxylgruppen aufweisen, die in praktisch gleicher Weise mit Ethylenoxid reagieren. Weiterhin ist es möglich, zu erfindungsgemäß verwendbaren Produkten zu kommen, indem man die Ringöffnung der 1,2-Epoxyalkane mit einem Überschuß an Ethylenglykol basisch katalysiert. Dabei entstehen im wesentlichen 1-(2-Hydroxyethoxy-)-2-Hydroxyalkane, die eine primäre und eine sekundäre Hydroxylgruppe aufweisen und mit Ethylenoxid bevorzugt an der primären Hydroxylgruppe reagieren.

. . .

Nach einer weiteren Ausführungsform der Erfindung sind Umsetzungsprodukte von Ethylenoxid mit Mischungen von aliphatischen 1,2-Diolen geeignet, die aus unverzweigten Produkten mit gerader und ungerader Kohlenstoffanzahl bestehen. Derartige Produkte können z. B. aus 1,2 Epoxyalkanmischungen der folgenden Zusammensetzungen hergestellt werden

C11 - C14 - Fraktion:

22 Gew.-% 1,2-Epoxyalkan C11
30 Gew.-% 1,2-Epoxyalkan C12
26 Gew.-% 1,2-Epoxyalkan C13 und
22 Gew.-% 1,2-Epoxyalkan C14.

C15 - C18 - Fraktion:

16 Gew.-% 1,2-Epoxyalkan C15
32 Gew.-% 1,2-Epoxyalkan C16
43 Gew.-% 1,2-Epoxyalkan C17 und
 9 Gew.-% 1,2-Epoxyalkan C18.

Diese 1,2-Epoxyalkane können in der beschriebenen Weise mit einem Überschuß an Ethylenglykol zu Zwischenprodukten ringgeöffnet werden, die entweder vorzugsweise primäre oder aber primäre und sekundäre Hydroxylgruppen aufweisen.

Erfindungsgemäß verwendbare Emulgatoren sind weiterhin herstellbar, indem man von Gemischen unverzweigter und 2-alkylverzweigter Olefinoxide mit einem Anteil an innenständigen Olefinoxiden ausgeht.

. . .

Diese Ausgangsstoffe fallen bei der Ethylenoligomerisierung nach Ziegler an. Sie sind z. B. in Ullmanns Enzyklopädie der technischen Chemie, Band 7, Seite 210, Verlag Chemie, Weinheim 1974 beschrieben. Die Epoxyalkane mit innenständiger Epoxidgruppe können ebenfalls nach dem Verfahren der deutschen Offenlegungsschrift 2 900 030 mit einem Überschuß an Ethylenglykol der Ringöffnung unterworfen und anschließend mit Ethylenoxid zu den erfindungsgemäß verwendbaren Emulgatoren umgesetzt werden. So werden Produkte mit günstigen Eigenschaften erhalten, wenn man beispielsweise von einer C16/C18-Fraktion einer Epoxyalkanmischung ausgeht, welche nach der Kettenlänge folgende Bestandteile enthält:

2 Gew.-% C14-Epoxyalkane

50 Gew.-% C16-Epoxyalkane

38 Gew.-% C18-Epoxyalkane und

10 Gew.-% C20-Epoxyalkane.

Nach der Struktur geordnet enthält dieses Gemisch die folgende Zusammensetzung:

ca. 60 Gew.-% unverzweigte endständige Epoxyalkane

ca. 25 Gew.-% 2-alkylverzweigte, endständige Epoxyalkane und

ca. 17 Gew.-% innenständige Epoxyalkane.

Erfindungsgemäß finden die Umsetzungsprodukte aliphatischer vicinaler Diole mit 5 - 200 mol Ethylenoxid pro mol Diol Verwendung. Unter dem Umsetzungsprodukt eines

...

aliphatischen vicinalen Diols mit beispielsweise 5 mol Ethylenoxid wird hier auch das mit 4 mol Ethylenoxid umgesetzte Ringöffnungsprodukt eines Epoxyalkans mit Ethylenglykol verstanden. Die erfindungsgemäß zu verwendenden Umsetzungsprodukte weisen mit steigender Ethylenoxidmenge steigende Hydrophilie auf. So sind die Umsetzungsprodukte mit mehr als 50 bzw. mehr als 100 mol Ethylenoxid sehr hydrophile Emulgatoren die bereits einen in der Technik gewünschten schutzkolloidartigen Effekt aufweisen. Besonders geeignete Emulgatoren sind die Umsetzungsprodukte mit 16 - 80 mol Ethylenoxid. Für viele Zwecke sind jedoch bereits die Umsetzungsprodukte mit 5 - 10 mol oder 11 bis 15 mol Ethylenoxid geeignet.

Die Umsetzungsprodukte von Ethylenoxid mit vicinalen, langkettigen Diolen können zur Emulsionspolymerisation zahlreicher ethylenisch ungesättigter Monomerer verwendet werden. So können die Verbindungen erfindungsgemäß bei der Emulsionspolymerisation von Monoolefinen verwendet werden. Geeignete Monoolefine sind beispielsweise Styrol oder andere Vinylaromaten wie α-Methylstyrol, ferner Isobuten. Es ist erfindungsgemäß bevorzugt, die Emulgatoren bei der Emulsionspolymerisation von Diolefinen einzusetzen insbesondere dann, wenn Polymere entstehen, deren Glastemperatur unterhalb Raumtemperatur liegt. So sind die Emulgatoren geeignet zur Herstellung von Kautschuklatices im weitesten Sinne, etwa von solchen auf Basis von Butadien, Isopren, chlorierten Butadienen oder chlorierten Isoprenen sowie auf Basis von Copolymeren

...

0129720

HENKEL KGaA
ZR-FE/Patente

von Diolefinen mit Styrol oder Acrylnitril.

Weiter ist es bevorzugt, die Substanzen bei der Emulsionspolymerisation von Estern und/oder Amiden der Acryl- und/oder Methacrylsäure einzusetzen. So können die Verbindungen verwendet werden bei der Polymerisation der Methyl-, Ethyl-, Propyl-, Isopropyl-, Butyl-, Hexyl-, und/oder 2-Ethylhexylester der Acrylsäure und/oder der Methacrylsäure. Ferner sind die Emulgatoren bei der Emulsionspolymerisation von n-Alkylamiden der Acrylsäure und/oder Methacrylsäure geeignet.

Erfindungsgemäß werden die Umsetzungsprodukte von Ethylenoxid mit langkettigen, vicinalen Diolen auch bei der Emulsionspolymerisation von Vinylestern eingesetzt. Geeignete Vinylester sind Vinylacetat, Vinylpropionat, Vinyl-2-ethylhexanat sowie höhere Ester des Vinylalkohols. Eine weitere Ausführungsform der Erfindung betrifft die Verwendung bei der Polymerisation von Vinylhalogeniden. Bevorzugte Vinylhalogenide sind Vinylchlorid und Vinylidenchlorid. Die Emulgatoren können weiterhin bei der Copolymerisation von mindestens einem der genannten Monomeren mit weiteren, gegebenenfalls teilweise wasserlöslichen Monomeren eingesetzt werden. So sind sie bei der Copolymerisation ethylenisch ungesättigter Monomerer mit Acrylnitril, mit Methacrylnitril, Malein- bzw. Fumarestern, wie Di-n-butylmaleinat oder mit Monobutylmaleinat geeignet. Schließlich können die Emulgatoren auch bei der Emulsionspolymerisation von Mischungen unterschiedlicher Monomerer verwendet werden, etwa von Acrylaten mit Styrol, Ethylen mit Vinylacetat gewünschtenfalls in Gegenwart von Vinylchlorid sowie Vinylacetat-Versaticsäurevinylester.

Erfindungsgemäß werden die Emulgatoren auch bei der
Copolymerisation ethylenisch ungesättigter, im wesentlichen wasserunlöslicher Monomerer mit dissoziierbaren,
wasserlöslichen Monomeren eingesetzt. Der Anteil der
dissoziierbaren, wasserunlöslichen Monomeren beträgt
dabei, bezogen auf Gesamtmonomere, weniger als 60 Gew.-%,
vorzugsweise zwischen 0,5 und 15 Gew.-%. Als wasserlösliche, dissoziierbare Monomere können eingesetzt werden:
Acrylsäure, Methacrylsäure, Itaconsäure, Maleinsäure,
Fumarsäure, Halbester der Maleinsäure, Crotonsäure,
Vinylphosphonsäure, Vinylsulfonsäure und/oder
2-Acrylamido-2- methylpropansulfonsäure (AMPS). Außer den
Säuren können auch deren Salze z. B. mit Alkalimetallen
oder Ammoniak eingesetzt werden. Weitere geeignete
Comonomere sind basische Ester der Acryl- und/oder
Methacrylsäure wie z. B. Dimethylaminoethylmethacrylat.

Erfindungsgemäß können die Umsetzungsprodukte von
Ethylenoxid mit vicinalen langkettigen Diolen als alleinige Emulgatoren (Primäremulgatoren) eingesetzt werden.
Es ist jedoch auch möglich, sie mit anderen Emulgatoren
oder mit herkömmlichen Schutzkolloiden zu kombinieren. So
können zusammen mit den erfindungsgemäß verwendeten Produkten anionaktive, nichtionogene oder kationaktive
Emulgatoren eingesetzt werden. Als anionaktive Emulgatoren können Seifen natürlicher oder synthetischer Fettsäuren, disproportionierte Harzseifen, wasserlösliche
Salze verzweigter Monocarbonsäuren, die z. B. durch die
sogenannte Guerbetreaktion zugänglich sind, Fettalkoholsulfate, Fettalkoholethersulfate, Alkylphenolether-

. . .

sulfate, Alkylbenzolsulfonate, Paraffinsulfonate, Alkylnaphthalinsulfonate, wasserlösliche Salze sulfatierter
Öle, Sulfobernsteinsäurehalbester, Sulfobernsteinsäurediester, Alkyletherphosphate, Alkylphenoletherphosphate,
Alkylisethionate, Kondensationsprodukte von Oxi- und
Aminoalkanolsulfonsäuren und/oder Alkyldiphenylethersulfonate eingesetzt werden. Als nichtionogene Emulgatoren, die mit den erfindungsgemäß verwendeten Produkten
kombiniert werden können, sind z. B. Alkylphenol-, Fettsäure- und/oder Fettalkoholethoxylate geeignet. Als kationaktive Emulgatoren sind beispielsweise Fettaminhydrochloride und/oder quartäre Ammoniumverbindungen geeignet.

Geeignete Schutzkolloide sind wasserlösliche Celluloseether wie Methylcellulose, Carboxymethylcellulose, Hydroxyethylcellulose oder auch teilverseiftes Polyvinylacetat oder teilverseifte Copolymere aus Polyvinylacetat
und Vinylbutylether.

Bei der erfindungsgemäßen Verwendung der Umsetzungsprodukte von Ethylenoxid mit langkettigen vicinalen Diolen
beträgt ein bevorzugtes Verhältnis zwischen Monomeren und
Wasser 1 : 3 bis 1 : 1 Gewichtsteile. Die Emulgatoren
werden, bezogen auf Gesamtemulsion in einer Menge von
0,1 bis 5 Gew.-%, vorzugsweise von 1 - 3 Gew.-%
eingesetzt. Zusammen mit den Emulgatoren können die bei
der Emulsionspolymerisation üblichen Hilfsstoffe eingesetzt werden. Derartige übliche Hilfsstoffe sind z. B.
Polymerisationsinitiatoren und -beschleuniger, so z. B.
Kalium- oder Ammoniumpersulfat, Wasserstoffperoxid,

...

Reduktionsmittel, Übergangsmetallverbindungen in Mengen
zwischen 0,05 und 2 Gew.-%. Weitere übliche Hilfsstoffe
sind Puffersubstanzen wie Natriumhydrogencarbonat,
Natriumpyrophosphat, Natriumacetat. Verwendet werden
können weiterhin Molekulargewichtsregler wie z. B.
2-Mercaptoethanol, Thioglycolsäure, Thioglykolsäureester
von Ethylenglycol, Glycerin oder Pentaerythrit oder auch
Isopropanol. Unter Verwendung der erfindungsgemäß
geeigneten Emulgatoren kann die Emulsionspolymerisation
im Temperaturbereich zwischen 20 und 120 °C, vorzugsweise
zwischen 40 und 100 °C und insbesondere zwischen 50 und
80 °C durchgeführt werden. Dabei kann unter Normaldruck,
oder insbesondere bei gasförmigen Monomeren, unter
erhöhtem Druck gearbeitet werden. Dabei können die dem
Polymerisationsfachmann bekannten Zugabeweisen angewendet
werden. So kann im Reaktionsgefäß eine Emulsion hergestellt und dann polymerisiert werden. Es können aber auch
Monomere, Hilfsstoffe oder weitere Emulsionen während der
Polymerisation chargenweise oder kontinuierlich zudosiert werden.

...

0129720

## Beispiel I

## Poly-n-butylacrylat

Rezeptur:

| | | | |
|---|---|---|---|
| 466,89 | g | dest. Wasser | ) |
| 22,96 | g | Ringöffnungsprodukt eines Gemi- | ) |
| | | sches aus 1,2-Epoxyalkan $C_{12}$ | ) |
| | | (ca.60 Gew.-%) und 1,2-Epoxyalkan) | Lösung 1 |
| | | $C_{14}$ (ca. 40 Gew.-%) mit Ethylen- | ) |
| | | glycol, umgesetzt mit 50 mol | ) |
| | | Ethylenoxid. (OHZ = 49,8) | ) |
| 1,15 | g | Ammoniumperoxodisulfat | ) |

| | | | |
|---|---|---|---|
| 450,0 | g | n-Butylacrylat | ) |
| 9,0 | g | Methacrylsäure | ) Lösung 2 |

| | | | |
|---|---|---|---|
| 48,85 | g | dest. Wasser | ) |
| 1,15 | g | Natriumdisulfit | ) Lösung 3 |
| 1.000,0 | g | Polymerdispersion | |

Apparatur:

geschlossener beheizbarer 2-1-Planschliffbecher, ausgerüstet mit V4A-Ankerrührer, Tropftrichter, Rückflußkühler und einem 2-1-Vorlegegefäß mit Blattrührer

...

Verfahren:

1,15 g Ammoniumperoxodisulfat und 22,96 g Emulgator werden in 466,89 g destilliertem Wasser im Vorlegegefäß gelöst (Lösung 1). 150 ml dieser Lösung werden in das Reaktionsgefäß gegeben. Zur restlichen Lösung 1 gibt man die Monomeren (Lösung 2) und emulgiert 15 min intensiv. 150 ml dieser Präemulsion werden ebenfalls in die Reaktionsapparatur gegeben und unter Rühren 30 min mit Stickstoff gespült. Danach läßt man aus der im Tropftrichter befindlichen Natriumdisulfit-Lösung (Lösung 3) 20 ml in das Reaktionsgefäß zulaufen und beginnt aufzuheizen. Zwischen 50 und 60°C setzt unter Temperaturanstieg die Polymerisation ein. Nunmehr werden gleichzeitig innerhalb von 1 bis 1,5 Stunden die Monomeremulsiion aus dem Vorlagegefäß und die restliche Lösung 3 zudosiert. Dabei wird die Temperatur auf 65 bis 68°C gehalten. Anschließend wird eine Stunde bei etwa 70°C nachgerührt und dann abgekühlt. Der pH-Wert der Emulsion wird mit 25prozentigem Ammoniak auf ca. 6 bis 7 eingestellt.

Der Koagulatanteil der Dispersion beträgt 0,5 %. Die stippenfreie Dispersion hat einen Trockengehalt von 47,0 % und eine Teilchengröße von ca. 0,1 µm.

...

Beispiel II

Polybutylacrylat-co-Styrol

Rezeptur:

|  | a | b | c | d | e |
|---|---|---|---|---|---|
|  | (Mengenangaben in g) | | | | |

Lösung 1

| | a | b | c | d | e |
|---|---|---|---|---|---|
| dest. Wasser | 386,0 | 367,3 | 367,3 | 367,3 | 386,0 |
| Kaliumperoxodisulfat | 2,0 | – | – | – | 2,0 |
| Ammoniumperoxodisulfat | – | 0,9 | 0,9 | 0,9 | – |
| anionaktiver Emulgator (Nonylphenol-4Ethylenoxid-Sulfat-Natriumsalz 30 Gew.-% in Wasser) | 17,0 | 15,5 | 15,5 | 15,5 | 17,0 |
| erfindungsgemäßer Emulgator | 10,0 | 9,1 | 9,1 | 9,1 | 10,0 |

|  | a | b | c | d | e |
|---|---|---|---|---|---|
| (Mengenangaben in g) | | | | | |

**Lösung 2**

| | a | b | c | d | e |
|---|---|---|---|---|---|
| Styrol | 240,0 | 223,9 | 223,9 | 223,9 | 240,0 |
| n-Butylacrylat | 240,0 | 223,9 | 223,9 | 223,9 | 240,0 |
| Acrylsäure | 5,0 | – | – | – | 5,0 |
| Methacrylsäure | – | 13,7 | 13,7 | 13,7 | – |

**Lösung 3**

| | a | b | c | d | e |
|---|---|---|---|---|---|
| dest. Wasser | 98,0 | 44,8 | 44,8 | 44,8 | 98,0 |
| Natriumdisulfit | 2,0 | – | – | – | 2,0 |
| Ammoniumdisulfit | – | 0,9 | 0,9 | 0,9 | – |
| Ansatz: | 1000 | 900 | 900 | 900 | 1000 |
| Koagulatanteil: | 1 % | 0,2 % | 0,2 % | 0,5 % | 2 % |

Verwendete erfindungsgemäße Emulgatoren:

Verwendet wurde das Ringöffnungsprodukt eines Gemisches aus 1,2-Epoxyalkan $C_{12}$ (ca. 60 Gew.-%) und 1,2-Epoxyalkan

$C_{14}$ (ca. 40 Gew.-%) mit Ethylenglycol, umgesetzt mit:

| Beispiel a) | 10 mol Ethylenoxid (EO) (OHZ = 155) |
|---|---|
| b) | 10 mol Ethylenoxid (EO) (OHZ = 155) |
| c) | 20 mol Ethylenoxid (EO) (OHZ = 102) |
| d) | 30 mol Ethylenoxid (EO) (OHZ = 78) |
| e) | Vergleichsbeispiel: |
| | Nonylphenol + 11 mol EO |

...

Apparatur:

s. Beispiel I

Verfahren für Beispiel IIa und IIe:

Die Komponenten der Lösung 1 werden gemischt und in das Reaktionsgefäß vorgelegt, anschließend ca. 30 min unter Rühren mit Stickstoff gespült. Ca. 30 ml der im Vorlegegefäß befindlichen Lösung 2 und 5 ml der im Tropftrichter befindlichen Lösung 3 werden zugegeben. Die Mantelheizung wird auf 90°C eingestellt. Bei einer Manteltemperatur von 70°C und einer Innentemperatur von 55°C setzt die Polymerisation ein. In diesem Augenblick wird mit der Dosierung der Monomerlösung 2 und der Natriumdisulfitlösung 3 begonnen. Die Reaktorinnentemperatur steigt relativ rasch auf 88 bis 98°C und wird bei dieser Temperatur gehalten. Die Dosierung der Lösungen 2 und 3 ist innerhalb von ca. einer Stunde beendet. Anschließend wird bei einer Manteltemperatur von 98°C eine Stunde nachpolymerisiert. Die Polymerdispersion wird auf ca. 50°C abgekühlt und bei dieser Temperatur mit 5,0 g 25prozentigem Ammoniak auf einen pH-Wert von 6 bis 7 eingestellt. Anschließend wird auf Raumtemperatur abgekühlt.

Verfahren für Beispiel IIb, IIc und IId

Die Komponenten der Lösung 1 werden in das Reaktionsgefäß vorgelegt und ca. 30 min unter Rühren mit Stickstoff

. . .

0129720

HENKEL KGaA
ZR-FE/Patente

gespült. Ca. 10 % der Monomerlösung 2 werden aus dem Vorlegegefäß zudosiert. Durch Einstellung der Mantelheizung auf 90°C wird das Reaktionsgemisch aufgeheizt. Bei einer Innentemperatur von 56°C beginnt die Polymerisationsreaktion. In diesem Augenblick wird mit der Zudosierung der restlichen Monomerlösung 2 und der Ammoniumperoxodisulfat-Lösung 3 begonnen. Die Temperatur im Reaktor steigt relativ rasch auf ca. 88°C und wird bei dieser Temperatur gehalten. Die Dosierung wird so eingestellt, daß innerhalb einer Stunde nach Dosierbeginn die restliche Lösung 2 und 2/3 der Lösung 3 zugegeben sind. Gegen Ende der Dosierphase steigt die Temperatur im Reaktor auf ca. 94°C. Durch Anheben der Mantelheizung auf 98°C und Dosierung des restlichen 1/3 Ammoniumperoxodisulfat-Lösung 3 wird die Nachpolymerisationsphase eingeleitet. Nach einer Stunde Nachpolymerisation wird die Dispersion auf ca. 50°C abgekühlt und bei dieser Temperatur mit 13,7 g 25prozentigem Ammoniak auf pH 6 bis 7 eingestellt. Anschließend wird auf Raumtemperatur abgekühlt.

...

0129720

HENKEL KGaA
ZR-FE/Patente

## Beispiel III

## Polyvinylacetat, schutzkolloidstabilisiert

Rezeptur:

|  | a | b |
|---|---|---|
|  | (Mengenangaben in g) | |
| dest. Wasser | 424,0 | 424,0 |
| nichtionogener Emulgator I | 1,6 | 3,2 |
| nichtionogener Emulgator II | 2,3 | - |
| Polyvinylalkohol (teilverseiftes Polyvinylacetat, Hydrolysegrad 87,7 mol % Viskosität nach DIN 53015 26 m Pas. als Schutzkolloid) | 21,0 | 21,0 |
| Kaliumperoxodisulfat | 0,7 | 0,7 |
| Vinylacetat | 198,2 | 198,2 |
| Ansatz: | 647,1 | 647,1 |

nichtionogener Emulgator  I: Emulgator aus Beispiel 2a

nichtionogener Emulgator II: 70%ige wäßrige Lösung des Umsetzungsproduktes von Nonylphenol mit 30 mol Ethylenoxid.

Apparatur:
s. Beispiel I

0129720

HENKEL KGaA
ZR-FE/Patente

Verfahren:

Destilliertes Wasser, nichtionogene Emulgatoren, Polyvinylalkohol und Kaliumperoxodisulfat werden im Reaktionsgefäß vorgelegt, unter Rühren aufgelöst und mit Stickstoff gespült. Ca. 15 g Vinylacetat-Monomer werden zudosiert. Durch Anlegen einer Mantelheizung von 70°C wird erwärmt. Bei einer Innentemperatur von 64°C beginnt die Polymerisationsreaktion, gleichzeitig wird mit der Dosierung des restlichen monomeren Vinylacetats begonnen. Die Dosierung ist innerhalb einer Stunde beendet, wobei die Reaktorinnentemperatur gegen Ende der Dosierung auf ca. 73°C ansteigt. Nach Erhöhung der Mantelheizung auf 80°C wird eine Stunde nachpolymerisiert. Es entsteht eine weiße Polymerdispersion, die durch Zusatz von 24 g Dibutylphtalat, 328 g Calcid und 0,3 g Konservierungsmittel zu einem hervorragenden Weißleim verarbeitet werden kann.

Beispiel IV

Vinylacetat-Vinylester-Copolymer

Rezeptur:

| | a | b | c | d | e |
|---|---|---|---|---|---|
| | (Mengenangaben in g) | | | | |

Lösung 1

| | a | b | c | d | e |
|---|---|---|---|---|---|
| dest. Wasser | 191,4 | 191,4 | 191,4 | 191,4 | 191,4 |
| n-Dodecylbenzol-sulfonat-Na-Salz | 1,4 | 1,4 | 1,4 | 1,4 | 1,4 |
| Kaliumperoxodisulfat | 0,5 | 0,5 | 0,5 | 0,5 | 0,5 |
| Borax | 0,2 | 0,2 | 0,2 | 0,2 | 0,2 |

|                                        | a     | b     | c     | d     | e     |
|----------------------------------------|-------|-------|-------|-------|-------|
| (Mengenangaben in g)                   |       |       |       |       |       |

Lösung 2

| dest. Wasser                    | 287,3 | 287,3 | 287,3 | 287,3 | 287,3 |
| n-Dodecylbenzolsulfat, Na-Salz  | 0,9   | 0,9   | 0,9   | 0,9   | 0,9   |
| erfindungsgemäßer Emulgator     | 12,0  | 12,0  | 12,0  | 12,0  | 12,0  |
| Kaliumperoxodisulfat            | 1,9   | 1,9   | 1,9   | 1,9   | 1,9   |
| Borax                           | 2,1   | 2,1   | 2,1   | 2,1   | 2,1   |

Lösung 3

| Vinylacetat                          | 330,1  | 330,1 | 330,1 | 330,1  | 330,1  |
| Versaticsäure-vinylester (VeoVa 10,Shell) | 143,5 | 143,5 | 143,5 | 143,5  | 143,5  |
| Acrylsäure                           | 4,8    | 4,8   | 4,8   | 4,8    | 4,8    |

| Ansatz:          | 976,1  | 976,1 | 976,1 | 976,1  | 976,1  |
| Koagulatanteil:  | 0,05 % | 0 %   | 0 %   | 0,05 % | 0,05%  |

...

0129720

HENKEL KGaA
ZR-FE/Patente

Verwendete erfindungsgemäße Emulgatoren:

Verwendet wurden die Ringöffnungsprodukte eines Gemisches aus 1,2-Epoxyalkan $C_{12}$ (ca. 60 Gew.-%) und 1,2-Epoxyalkan $C_{14}$ (ca. 40 Gew.-%) mit Ethylenglycol, umgesetzt mit:

Beispiel a)    7 mol Ethylenoxid (EO) (OHZ = 192)
        b)   10 mol EO (OHZ = 155)
        c)   20 mol EO (OHZ = 102)
        d)   30 mol EO (OHZ =  78)
        e)   50 mol EO (OHZ =  50)

Apparatur:

s. Beispiel I

Verfahren:

Die Komponenten der Lösung 1 werden in das Reaktionsgefäß vorgelegt, mit Stickstoff gespült und auf 80°C aufgeheizt. Während der Aufheizpause wird im Vorlagegefäß durch Zugabe der Monomerlösung 3 zur emulgatorhaltigen wäßrigen Phase Lösung 2 durch kräftiges Rühren eine Präemulsion hergestellt. Der pH-Wert der Präemulsion wird auf 3,8 bis 4,0 eingestellt. Bei Erreichen einer Reaktorinnentemperatur von 80°C wird mit der Dosierung der Monomerpräemulsion begonnen. Die Dauer der Dosierung beträgt 2 bis 2,5 Stunden. Nach beendeter Zugabe wird die Temperatur des Reaktionsgemisches weitere 2 Stunden bei

. . .

80°C gehalten. Die Dispersion wird abgekühlt und filtriert und der pH-Wert mit 23,9 g einer 10prozentigen Ammoniumcarbonat-Lösung auf 7,0 bis 7,5 eingestellt.

Die Eigenschaften der nach Beispiel IV hergestellten Polymerdispersionen sind nachfolgend aufgeführt.

| | a | b | c | d | e |
|---|---|---|---|---|---|
| Trockenrückstand (theoretisch 50 %) | 49,3 % | 49,2 % | 49,2 % | 49,1 % | 49,4 % |
| Teilchengröße (visuell) | 0,1µm | 0,1µm | 0,1µm | 0,1µm | 0,1µm |
| mechanische Stabilität | 0 % | 0 % | 0 % | 0 % | 0 % |
| Brookfield-Viskosität, 20°C (mPa·s) (Spindel 1) | 170 | 153 | 153 | 132 | 195 |

Filmbeurteilung
b. Raumtemperatur ⊢——————klar, transparent——————⊣
b. 105°C ⊢——————hellbraun, transparent————⊣

...

Prüfmethoden

1  Koagulatgehalt nach der Herstellung
   Die fertiggestellte Dispersion wird durch einen tarierten Perlonsiebbeutel der Fa. Schwegman mit 80 micron Maschenweite abgefüllt. Der Siebbeutel mit evtl. vorhandenem Koagulat wird 24 Stunden bei 105°C getrocknet und das Koagulat durch Differenzwägung bestimmt.

2  Trockengehalt
   Trockenrückstandsbestimmungen (Fa. Satorius), Typ 709301. Der Feststoffgehalt wird bei Stufe 7 und 20 min Trockenzeit bestimmt. Die Einwaage beträgt ca. 5 g.

3  Bestimmung der Teilchengröße
   Die Teilchengröße wird nach folgenden Maßstäben visuell bestimmt:

   milchig-weiße Dispersion        = oberhalb 1 micron

   bläulich-weiße bis              = 1 micron bis 0,1 micron
   bräunlich-weiße Dispersion

   grau-weiße, semi-              = 0,1 micron bis
   transparente Dispersion          0,05 micron

   praktisch transparente          = unter 0,05 micron
   Dispersion

. . .

4  Mechanische Stabilität 80 g der Dispersion werden 30 min bei 14.000 Upm mit einem Klaxon-Rührer, Typ HM UB 2 (Klaxon Ltd.), gerührt und anschließend durch einen 80-micron-Siebbeutel der Fa. Schwegmann filtriert. Der Koagulatanteil wird durch Trocknung und Differenzwägung des evtl. im Siebbeutel verbliebenen Koagulates bestimmt. (analog ASTM D 1076).

5  Viskosität Die Viskosität wird mit einem Brookfield-Viskosimeter vom Typ RVT bei 20°C gemessen.

6  Filmbeurteilung Mit einem Ziehlineal (ca. 1 mm Spalthöhe) werden zwei Filme ausgezogen.
Ein Film wird 48 Stunden bei Raumtemperatur getrocknet, der andere Film 24 Stunden bei 105°C.
Die Beurteilung erfolgt in beiden Fällen auf Farbe und Transparenz.

...

0129720

HENKEL KGaA
ZR-FE/Patente

## Patentansprüche

1. Verwendung der Umsetzungsprodukte von Ethylenoxid mit aliphatischen vicinalen Diolen mit 8 - 25 C-Atomen als Emulgatoren bei der Emulsionspolymerisation ethylenisch ungesättigter Monomerer.

2. Ausgestaltung nach Anspruch 1, dadurch gekennzeichnet, daß die Umsetzungsprodukte von 5 - 200 mol, vorzugsweise 11 - 100 mol und insbesondere 16 - 80 mol Ethylenoxid mit 1 mol aliphatischem vicinalem Diol verwendet werden.

3. Ausgestaltung nach den Ansprüchen 1 und 2, dadurch gekennzeichnet, daß die Umsetzungsprodukte von Ethylenoxid mit aliphatischen vicinalen Diolen mit 12 - 18 C-Atomen verwendet werden.

4. Ausgestaltung nach den Ansprüchen 1 - 3, dadurch gekennzeichnet, daß die Umsetzungsprodukte von linearen und/oder verzweigten alipathischen 1,2 - Diolen verwendet werden.

5. Ausgestaltung nach den Ansprüchen 1 - 4, dadurch gekennzeichnet, daß die Umsetzungsprodukte von Ethylenoxid mit ausschließlich sekundäre Hydroxylgruppen tragenden aliphatischen vicinalen Diolen verwendet werden.

...

6. Ausgestaltung nach den Ansprüchen 1 - 5, dadurch gekennzeichnet, daß die Umsetzungsprodukte von Ethylenoxid mit aliphatischen vicinalen Diolen in einer Menge von 0,5 - 5 Gew.-%, bezogen auf Emulsion, eingesetzt werden.

7. Ausgestaltung nach den Ansprüchen 1 - 6, dadurch gekennzeichnet, daß die Umsetzungsprodukte von Ethylenoxid mit aliphatischen vicinalen Diolen in Abmischung mit weiteren anionischen, kationischen und/oder nichtionischen Emulgatoren eingesetzt werden.